# EUROPEAN PATENT APPLICATION

(11) **EP 4 398 410 A1**
(43) Date of publication of application: **10.07.2024**
(21) Application number: 22909264.8
(22) Date of filing: 25.07.2022
(51) Int. Cl.: H01M 50/569

(54) **BATTERY MODULE**

(30) Priority: 20.12.2021 CN 202123210222 U
(71) Applicant: Eve Power Co., Ltd., Jingmen Hubei 448000 (CN)
(72) Inventor: CHEN, Jianbao, Jingmen, Hubei 448000 (CN); ZHANG, Guojiang, Jingmen, Hubei 448000 (CN)
(74) Representative: Herrero & Asociados, S.L.
(86) International application number: PCT/CN2022/107567
(87) International publication number: WO 2023/115934

(57) **Abstract**

A battery module, comprising a plurality of cells arranged in a straight line and two collection assemblies. Each of the cells is provided with a positive terminal and a negative terminal, the positive terminal and the negative terminal of each cell are respectively arranged on two opposite sides of the cell, and any two adjacent cells are reversely arranged, so that the positive terminal of one cell and the negative terminal of the other adjacent cell are arranged on a same side. The two collection assemblies are respectively electrically connected to the positive terminals or negative terminals on the two sides to collect voltage and temperature signals. Each collection assembly comprises a first cable and a second cable. The first cable and the second cable are respectively configured to collect voltage and temperature signals of some of the cells, the first cable comprises a first inclined edge, the second cable comprises a second inclined edge, and the first inclined edge and the second inclined edge are arranged in parallel.

## Description

### TECHNICAL FIELD

The present disclosure relates to technical field of batteries, and in particular to a battery module.

### BACKGROUND

As the application of electric vehicles becomes more and more widespread, battery modules are widely applied due to their advantages of high energy density and stable power storage performance. In a battery module with a two-outlet pole cell, the positive and negative poles of each cell are arranged on both sides of the cell. To facilitate series connection of the cells, adjacent cells are arranged in reverse direction, which makes the collection of voltage and temperature signals of the cells more complicated. An existing collection assembly is commonly adopted with wire harnesses, while the number of the wire harnesses is large and the connection path is complex, such that the overall space occupied by the collection assembly is large, which results in a reduction in the energy density of the battery module.

### SUMMARY OF THE DISCLOSURE

It is an object of the present disclosure to provide a battery module that may reduce the occupied space of a collection assembly and improve the energy density of the battery module.

A battery module, including:
a plurality of cells, arranged in a straight line; wherein each cell is arranged with a positive terminal and a negative terminal; a positive terminal of each cell is arranged on a side of the cell, and a negative terminal of the cell is arranged on another side of the cell opposite to the positive terminal; each adjacent two of the plurality of cells are arranged in a reverse direction, such that the positive terminal of one of the adjacent two of the plurality of cells is arranged on a same side as the negative terminal of the other of the adjacent two of the plurality of cells; and
two collection assemblies; wherein one of the two collection assemblies is electrically connected to the positive terminal or the negative terminal on a side, and the other of the two collection assemblies is electrically connected to the negative terminal positive terminal or the negative terminal on another side; each collection assembly includes:
a first cable, configured to obtain voltage signals and temperature signals of some of the plurality of cells; wherein the first cable includes a first inclined edge; and
a second cable, configured to obtain the voltage signals and the temperature signals of others of the plurality of cells; wherein the second cable includes a second inclined edge, and the first inclined edge and the second inclined edge are arranged in parallel.

### BRIEF DESCRIPTION OF THE DRAWINGS

FIG. 1 is a partial structural schematic view of a battery module according to some embodiments of the present disclosure.
FIG. 2 is a partial structural schematic view of two collection assemblies according to some embodiments of the present disclosure.
FIG. 3 is a partial structural schematic view of a collection assembly according to some embodiments of the present disclosure.

### Reference numerals:

4, first cable; 41, first inclined edge; 42, first branch; 43, second branch;
5, second cable; 51, second inclined edge; 52, third inclined edge; 53, third branch; 54, fourth branch;
6, first temperature-sensitive package; 7, second temperature-sensitive package; 8, cable board; 9, film;
10, connection member; 101, positioning hole;
11, collection member;
12, support plate; 121, riveting post;
13, collection connector.

### DETAILED DESCRIPTION

In the description of the present disclosure, it is to be noted that, unless otherwise expressly provided and limited, the terms "mounted", "connected", "coupled" are to be broadly construed. For example, it may be a fixed connection or a removable connection, a mechanical connection or an electrical connection, a direct connection or an indirect connection through an intermediate medium, or a connection within two elements. For those skilled in the art, the specific meaning of the above terms in the present disclosure can be understood in specific cases.

In the present disclosure, unless otherwise expressly provided and limited, a first feature being "above" or "under" a second feature may include the first and second features being in direct contact, or the first and second features being in contact not directly but through another feature between them. Furthermore, the first feature being "above", "over" and "on top of" the second feature includes the first feature being directly above and diagonally above the second feature, or simply indicates that the first feature is horizontally higher than the second feature. The first feature being "below", "under", and "beneath" the second feature includes the first feature being directly below and diagonally below the second feature, or simply indicates that the first feature is horizontally lower than the second feature.

In a battery module with a two-outlet pole cell, a positive pole and a negative pole post of the cell are arranged on both sides of the cell. To facilitate series connection of the cells, adjacent cells are arranged in reverse direction, which makes the collection of voltage and temperature signals of the cells more complicated. An existing collection assembly is commonly adopted with wire harnesses, while the number of the wire harnesses is large and the connection path is complex, such that the overall space occupied by the collection assembly is large, which results in a reduction in the energy density of the battery module. Therefore, the present embodiments provide a battery module to solve the above problems.

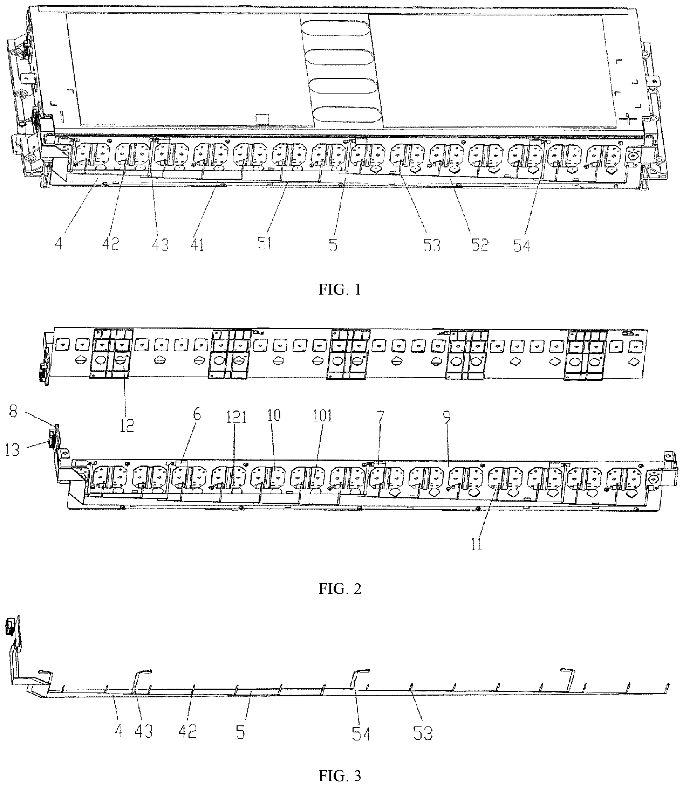

As shown in FIGS. 1-2, the battery module includes a housing, and multiple cells and two collection assemblies that are disposed in the housing. The multiple cells are arranged in a straight line. In some embodiments, the multiple cells are arranged in a direction extending along a thickness direction of the cells to form a rectangular-shaped cell set. The two collection assemblies are adopted with Flexible Flat Cables (FFCs) instead of wire harnesses to obtain voltage and temperature signals of the cells.

Specifically, a positive terminal of each cell is arranged on a side of the cell, and a negative terminal of the cell is arranged on another side of the cell opposite to the positive terminal. Each adjacent two cells are arranged in reverse direction, such that the positive terminal of one cell is arranged on the same side as the negative terminal of the other adjacent cell. One of the two collection assemblies is electrically connected to the positive terminal or the negative terminal on a side of the cell set, and the other of the two collection assemblies is electrically connected to the negative terminal positive terminal or the negative terminal on the other side of the cell set, i.e., the two collection assemblies are arranged on the two sides of the cell set to obtain the voltage and temperature signals.

As shown in FIG. 3, each collection assembly includes a first cable 4 and a second cable 5, and each of the first cable 4 and the second cable 5 may be specifically a Flexible Flat Cable (FFC); where the first cable 4 is configured to obtain the voltage and temperature signals of some cells, the second cable 5 is configured to obtain the voltage and temperature signals of some cells, and the two collection assemblies can obtain the voltage signals of all the cells. In some embodiments, the first cable 4 includes a first inclined edge 41 and the second cable 5 includes a second inclined edge 51, and the first inclined edge 41 and the second inclined edge 51 are arranged in parallel to reduce space occupation. For example, when only one FFC is provided in the battery module and the FFC includes 10 branches, the width of the FFC is the sum of the widths of the 10 branches; while when two FFCs are provided in the battery module and each FFC includes 5 branches, i.e., the width of the one FFC is the sum of the widths of the 5 branches and the arrangement of the two FFCs satisfies that the two FFCs do not stack on the width direction, the overall width of the two FFCs is the sum of the widths of the 5 branches, which is half of the width when only one FFC is provided.

In some embodiments, to make the overall length occupied by the first cable 4 and the second cable 5 as small as possible, a gap between the first inclined edge 41 and the second inclined edge 51 is as small as possible.

Adopting the FFC instead of the wire harness can effectively reduce the occupied space. However, when the number of cells is large, the FFC has too many branches, making the width of the FFC larger. In response thereto, the present discloses may reduce the overall width and save space by arranging the first cable 4 and the second cable 5 and making the first cable 4 and the second cable 5 parallel to each other through the first inclined edge 41 and the second inclined edge 51. Therefore, the battery module may reduce the space occupied by the collection assemblies and improve the energy density of the battery module.

In some embodiments, the first cable 4 forks out first branches 42 and a second branch 43 at the first inclined edge 41, the first branches 42 being electrically connected to some cells to collect the voltage signals of the cells, and the second branch 43 being configured to collect the temperature signals. To ensure a compact structure inside the battery module, in some embodiments, the length direction of the trunk circuits of the first cable 4 and the second cable 5 are in the same direction as the thickness direction of the cells.

To facilitate the connection of the first branch 42 with the cells, in some embodiments, the first branch 42 is folded once to form an L-shape, such that an end of the first branch 42 is electrically connected to a corresponding cell. It is known that the cell may expand and deform during use, and the folding of the first branch 42 may enable the first branch 42 to be movable with the cell to avoid disconnection.

In some embodiments, as shown in FIGS. 2 and 3, each collection assembly further includes a first temperature-sensitive package 6, the first temperature-sensitive package 6 being configured to collect the temperature signals. The second branch 43 is folded twice to form a Z-shape, such that an end of the second branch 43 is connected to the first temperature-sensitive package 6. In some embodiments, the folds are all at a right angle, but of course, the angle of the folds may be adjusted according to the length of the second branch 43 and the distance between the first temperature-sensitive package 6 and the first cable 4. Similarly, since the first temperature-sensitive package 6 is connected to a corresponding cell, when the cell undergoes expansion and deformation, the first temperature-sensitive package 6 is movable together, and the folding of the second branch 43 may enable the second branch 43 to be movable with the cell to avoid disconnection. In some embodiments, the end of the second branch 43 is connected to the first temperature-sensitive package 6 by a welding process. In some embodiments, a structural adhesive is provided at the welding position to fix and protect the welding position.

In some embodiments, the second cable 5 includes a third inclined edge 52 opposite to the second inclined edge 51, and the second cable 5 forks out third branches 53 and a fourth branch 54 at the third inclined edge 52. The third branches 53 are electrically connected to some cells to collect the voltage signals, and the fourth branch 54 is configured to collect the temperature signals.

Similarly, the third branch 53 is folded once to form an L-shape, such that an end of the third branch 53 is electrically connected to a corresponding cell. When the cell expands and deforms, the folding of the third branch 53 may enable the third branch 53 to be movable with the cell to avoid disconnection.

In some embodiments, each collection assembly further includes a second temperature-sensitive package 7, the second temperature-sensitive package 7 being configured to collect the temperature signals. The second cable 5 can transmit the temperature signals measured by the second temperature-sensitive package 7. The fourth branch 54 is folded twice to form a Z-shape, such that an end of the fourth branch 54 is connected to the second temperature-sensitive package 7. In some embodiments, the folds are all at a right angle, but of course, the angle of the folds may also be adjusted according to the length of the fourth branch 54 and the distance between the second temperature-sensitive package 7 and the second cable 5. Similarly, since the second temperature-sensitive package 7 is connected to a corresponding cell, when the cell expands and deforms, the second temperature-sensitive package 7 is movable together, and the folding of the fourth branch 54 may enable the fourth branch 54 to be movable with the cell to avoid disconnection. In some embodiments, the end of the fourth branch 54 is connected to the second temperature-sensitive package 7 by a welding process. In some embodiments, a structural adhesive is provided at the welding position to fix and protect the welding position.

In some embodiments, the second inclined edge 51 is parallel to the third inclined edge 52, i.e. the second cable 5 has a parallelogram structure. Since the first inclined edge 41 is parallel to the second inclined edge 51, the first cable 4 and the second cable 5 can be set to be of the same length and width, resulting in the overall width of the first cable 4 and the second cable 5 being half the width in the case with only one FFC provided.

In some embodiments, each collection assembly further includes a cable board 8, which may be specifically a Printed Circuit Board (PCB). A first summary end of the first cable 4 is arranged on a side of the cable board 8, and a second summary end of the second cable 5 is arranged on another side of the cable board 8 opposite to the first summary end of the first cable 4. Compared to the design where the first and second summary ends are arranged on a same side, the setting of the two on the two opposite sides reduces the occupancy of the cable board 8, and thus reduces the size of the cable board 8. In addition, the first summary end and the second summary end are simultaneously welded on the cable board 8 with a double-sided high temperature welding process, which may reduce the process steps and improve work efficiency. In some embodiments, a structural adhesive is provided at the welding position of the first summary end and the cable board 8, and at the welding position of the second summary end and the cable board 8 to fix and protect the welding positions.

In some embodiments, to protect the cable board 8, a flame-resistant plate is attached to a side of the cable board 8 to protect the PCB8 in case of temperature abnormality of the cells. In some embodiments, a reinforcement member is further arranged on the side of the PCB 8 where the flame-resistant plate is provided. In some embodiments, the reinforcement member is foam, which plays a supporting role and a cushioning protective role.

In some embodiments, each collection assembly further includes a collection connector 13, which is electrically connected to the cable board 8, and the collection connector 13 is further electrically connected to a battery management system, such that the voltage and temperature signals of the cells can be transmitted to the battery management system.

Fixing each element of the collection assemblies enables that the collection assembly can be processed and molded first and then processed with the cells, thereby reducing the process difficulty, reducing the number of process steps, and thus improving the work efficiency. In some embodiments, each collection assembly further includes a film 9, which may be made of polyethylene terephthalate (PET). It is known that the PET material is lightweight, which is conducive to reducing the quality of the collection assembly. The first cable 4 and the second cable 5 are fixed to the film 9 to fix their relative positions, which is conducive to the subsequent connection with the cells.

In some embodiments, the first temperature-sensitive package 6 and the second temperature-sensitive package 7 are both attached to the film 9 by adhesive backing, and because the strength of the film 9 is insufficient, a reinforcement member may be arranged at an attachment position. In some embodiments, the first temperature-sensitive package 6 and the second temperature-sensitive package 7 are arranged on a side of the film 9, and the reinforcement member is arranged on the other side of the film 9. The reinforcement member can support the film 9 to ensure the attachment strength. In some embodiments, the reinforcement member is foam, which can provide cushioning to protect loose components while supporting the film 9 to ensure the attachment strength.

In some embodiments, each collection assembly further includes multiple connectors 10 and multiple collection members 11. Each of the connectors 10 is electrically connected to corresponding adjacent two cells or to one of the cells at an end of the cell set. In some embodiments, the connectors 10 are aluminum rows. The multiple collection members 11 are electrically connected to the connectors 10 in a one-to-one correspondence. In some embodiments, the collection members 11 are nickel tabs. The first branches 42 are electrically connected to some of the collection members 11 in a one-to-one correspondence, and the third branches 53 are electrically connected to the remaining of the collection members 11 in a one-to-one correspondence. That is, the first cable 4 is electrically connected to the cells via the collection members 11, and the second cable 5 is electrically connected to the cells via the connectors 10.

To fix the relative positions of the connectors 10, in some embodiments, each of the collection assemblies further includes multiple support plates 12 connected to the housing, and the support plates 12 are configured to fix the relative positions between the connectors 10, the film 9, and the housing. Specifically, each support plate 12 is arranged with a riveting post 121, the film 9 defines a riveting hole, and a corresponding connector 10 defines a positioning hole 101. The riveting post 121 passes through the riveting hole and the positioning hole 101 in turn and is riveted to the corresponding connector 10 to ensure that there is no loosening and relative movement between the three during the subsequent use of the battery module.

## Claims

1. A battery module, comprising:
a plurality of cells, arranged in a straight line; wherein each cell is arranged with a positive terminal and a negative terminal; the positive terminal of each cell is arranged on a side of the cell, and positive negative terminal of the cell is arranged on another side of the cell opposite to the positive terminal; each adjacent two of the plurality of cells are arranged in a reverse direction, such that the positive terminal of one of the adjacent two of the plurality of cells is arranged on a same side as the negative terminal of the other of the adj acent two of the plurality of cells; and
two collection assemblies; wherein one of the two collection assemblies is electrically connected to the positive terminal or the negative terminal on a side, and the other of the two collection assemblies is electrically connected to the negative terminal positive terminal or the negative terminal on another side; each collection assembly comprises:
a first cable (4), configured to obtain voltage signals and temperature signals of some of the plurality of cells; wherein the first cable (4) comprises a first inclined edge (41); and
a second cable (5), configured to obtain the voltage signals and the temperature signals of others of the plurality of cells; wherein the second cable (5) comprises a second inclined edge (51), and the first inclined edge (41) and the second inclined edge (51) are arranged in parallel.

2. The battery module according to claim 1, wherein the first cable (4) forks out a plurality of first branches (42) and a second branch (43) at the first inclined edge (41), the first branches (42) being electrically connected to the some of the plurality of cells, and the second branch (43) being configured to collect the temperature signals.

3. The battery module according to claim 2, wherein the second cable (5) further comprises a third inclined edge (52) opposite to the second inclined edge (51), and the second cable (5) forks out a plurality of third branches (53) and a fourth branch (54) at the third inclined edge (52); the plurality of third branches (53) are electrically connected to the others of the plurality of cells, and the fourth branch (54) is configured to collect the temperature signals.

4. The battery module according to claim 3, wherein the second inclined edge (51) is parallel to the third inclined edge (52).

5. The battery module according to claim 2, wherein the first branch (42) is folded once to form an L-shape, such that an end of the first branch (42) is electrically connected to a corresponding cell; and/or
each collection assembly further comprises a first temperature-sensitive package (6), the first temperature-sensitive package (6) being configured to collect the temperature signals; the second branch (43) is folded twice to form a Z-shape, such that an end of the second branch (43) is connected to the first temperature-sensitive package (6).

6. The battery module according to claim 3, wherein the third branch (53) is folded once to form an L-shape, such that an end of the third branch (53) is electrically connected to a corresponding cell; and/or
each collection assembly further comprises a second temperature-sensitive package (7), the second temperature-sensitive package (7) being configured to collect the temperature signals; the fourth branch (54) is folded twice to form a Z-shape, such that an end of the fourth branch (54) is connected to the second temperature-sensitive package (7).

7. The battery module according to claim 3, wherein each collection assembly further comprises a cable board (8); a first summary end of the first cable (4) is arranged on a side of the cable board (8), and a second summary end of the second cable (5) is arranged on another side of the cable board (8) opposite to the first summary end of the first cable (4); the first summary end and the second summary end are simultaneously welded on the cable board (8) with a double-sided high temperature welding process.

8. The battery module according to claim 7, wherein each collection assembly further comprises a film (9); the first cable (4) and the second cable (5) are fixed to the film (9).

9. The battery module according to claim 8, wherein each collection assembly further comprises a plurality of connectors (10) and a plurality of collection members (11); each connector (10) is electrically connected to corresponding adjacent two of the plurality of cells or to one of the plurality of cells at an end; the plurality of collection members (11) are electrically connected to the plurality of connectors (10) in a one-to-one correspondence; the plurality of first branches (42) are electrically connected to some of the plurality of collection members (11) in a one-to-one correspondence, and the plurality of third branches (53) are electrically connected to a remaining of the plurality of collection members (11) in a one-to-one correspondence.

10. The battery module according to claim 9, further comprising a housing; wherein the plurality of cells and the two collection assemblies are arranged in the housing; each collection assembly further comprises a plurality of support plates (12) connected to the housing, and each support plate (12) is arranged with a riveting post (121); the film (9) defines a riveting hole, and a corresponding connector (10) defines a positioning hole (101); the riveting post (121) passes through the riveting hole and the positioning hole (101) in turn and is riveted to the corresponding connector (10).
